(19) Europäisches Patentamt
European Patent Office
Office européen des brevets

(11) **EP 2 426 022 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(51) Int Cl.:
***B60W 20/00*** *(2006.01)*     ***B60W 10/06*** *(2006.01)*
***B60W 10/08*** *(2006.01)*     ***B60K 6/46*** *(2007.10)*

(21) Anmeldenummer: **11177824.7**

(22) Anmeldetag: **17.08.2011**

(54) **Verfahren und System zur Steuerung eines Antriebs eines Fahrzeugs**

Method and system for controlling a drive of a vehicle

Procédé et système de commande d'un entraînement de véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.09.2010 DE 102010040137**

(43) Veröffentlichungstag der Anmeldung:
**07.03.2012 Patentblatt 2012/10**

(73) Patentinhaber: **Robert Bosch GmbH**
**70442 Stuttgart (DE)**

(72) Erfinder:
• **Richter, Jens**
**Farmington Hills, 483313418 (US)**
• **Yilman, Sinan**
**73655 Pluederhausen (DE)**
• **Glora, Michael**
**71706 Markgroeningen (DE)**

(56) Entgegenhaltungen:
**EP-A2- 0 800 948**     **WO-A2-2006/123843**
**DE-U1-202009 014 828**     **FR-A1- 2 729 343**
**US-A1- 2010 029 442**

EP 2 426 022 B1

**Beschreibung**

Die vorliegende Erfindung betrifft ein Verfahren nach dem Oberbegriff des Anspruchs 1 und ein System zur Steuerung eines Antriebs eines Fahrzeugs, sowie ein für das Verfahren und das System geeignetes Fahrzeug.

Stand der Technik

Aus dem Stand der Technik sind Hybridfahrzeuge bekannt, die als Antrieb sowohl einen Elektromotor als auch einen Verbrennungsmotor aufweisen, wobei der Verbrennungsmotor entweder mit dem das Fahrzeug antreibenden Elektromotor in unterstützender Weise gekoppelt oder mit einem weiteren als Generator wirkenden Elektromotor verbunden ist, welcher den das Fahrzeug antreibenden Elektromotor mit Energie versorgt, um ein oder mehrere Antriebsräder des Hybridfahrzeugs anzutreiben.

Aus der Druckschrift DE 20 2009 014 828 U1 ist ein Fahrzeug mit einem Hybridantrieb bekannt, bei dem ein Verbrennungsmotor und ein Elektromotor auf einem Antriebsstrang angeordnet sind, so dass Verbrennungsmotor und Elektromotor gleichzeitig und sich gegenseitig unterstützend das Fahrzeug antreiben können. Alternativ ist es möglich, dass der Verbrennungsmotor den Elektromotor als Generator antreibt, um so eine elektrische Speichervorrichtung aufladen zu können.

Dabei entspricht allerdings der Betrieb des Verbrennungsmotors in einem solchen Hybridfahrzeug nicht dem Verhalten eines Verbrennungsmotors in einem herkömmlichen Fahrzeug mit einem Getriebe mit mehreren Übersetzungsstufen, wo ein Fahrer anhand der momentan gewählten Übersetzungsstufe Rückschlüsse auf den Fahrzustand des Fahrzeugs schließen kann.

Aus der Druckschrift US 2010/029442 A1 ist ein Steuersystem zur Drehmomentenänderung bekannt, durch welches das Drehmoment oder die Drehzahl einer Antriebs kontrolliert wird. Dabei wird eine Mehrzahl von Übersetzungsstufen in der Steuerung für einen Betrieb eines Verbrennungsmotors festgelegt und sowohl eine momentane Fahrtgeschwindigkeit v des Fahrzeugs an einem Antriebsrad als auch eine von einem Fahrer angeforderte Leistung P erfasst. Diese Druckschrift offenbart die Merkmale des Oberbegriffs des Anspruchs 1.

Offenbarung der Erfindung

Die Erfindung schlägt deshalb unter einem ersten Aspekt gemäß Anspruch 1 ein Verfahren zur Steuerung eines Antriebs eines Fahrzeugs vor, wobei der Antrieb wenigstens einen Elektromotor, einen Generator zum Versorgen des Elektromotors mit Energie, einen Verbrennungsmotor zum Antreiben des Generators, wenigstens ein mit dem Elektromotor gekoppeltes und von diesem antreibbares Antriebsrad, und eine mit dem Elektromotor, dem Generator und dem Verbrennungsmotor in Verbindung stehende Steuerung umfasst; wobei das Verfahren die folgenden Schritte umfasst: Festlegen einer Mehrzahl von Übersetzungsstufen $G_n$ in der Steuerung für einen Betrieb des Verbrennungsmotors, wobei n eine natürliche Zahl ist; Erfassen einer momentanen Fahrgeschwindigkeit v des Fahrzeugs an dem wenigstens einen Antriebsrad sowie einer von einem Fahrer angeforderten Leistung P durch die Steuerung; Auswählen einer momentanen Übersetzungsstufe $G_{momentan}$ von der Mehrzahl von Übersetzungsstufen $G_n$ in Abhängigkeit von momentaner Fahrgeschwindigkeit v und angeforderter Leistung P durch die Steuerung, wobei der Betrieb des Verbrennungsmotors bzw. des Generators bei der momentanen Übersetzungsstufe $G_{momentan}$ unter Abgabe eines sich ändernden, d.h. zunehmenden oder abnehmenden, Drehmoments Trq bei einer Drehzahl n stattfindet, und zwar solange, bis ein oberer oder unterer Drehmomentgrenzwert bei der jeweiligen momentanen Übersetzungsstufe $G_{momentan}$ erreicht wird; und Wechseln des Betriebs des Verbrennungsmotors bzw. des Generators auf eine zu der momentanen Übersetzungsstufe $G_{momentan}$ benachbarte Übersetzungsstufe $G_{n\pm1}$ durch die Steuerung, und zwar wenn der obere oder untere Drehmomentgrenzwert bei der jeweiligen momentanen Übersetzungsstufe überschritten bzw. unterschritten wird.

Unter einem zweiten Aspekt gemäß Anspruch 7 schlägt die Erfindung ein Antriebssystem für ein Fahrzeug vor, umfassend: wenigstens einen Elektromotor; einen Generator zum Versorgen des Elektromotors mit Energie; einen Verbrennungsmotor zum Antreiben des Generators; wenigstens ein mit dem Elektromotor gekoppeltes und von diesem antreibbares Antriebsrad; und eine mit dem Elektromotor, der elektrischen Speichervorrichtung, dem Generator und dem Verbrennungsmotor in Verbindung stehende Steuerung; wobei das Antriebssystem nach dem Verfahren des ersten Aspekts betrieben wird.

Unter einem dritten Aspekt gemäß Anspruch 8 schlägt die Erfindung ein Fahrzeug mit einem Antriebssystem gemäß dem zweiten Aspekt vor.

Vorteile der Erfindung

Der Vorteil des Verfahrens bzw. Systems gemäß einer Ausführungsform der Erfindung ergibt sich daraus, dass das einem Fahrer bekannte Verhalten eines Fahrzeugs mit herkömmlichem Verbrennungsmotorantrieb in Verbindung mit einem Getriebe mit mehreren Übersetzungsstufen auf ein Hybridfahrzeug übertragen wird, ohne dass ein solches Getriebe tatsächlich verwendet wird. Wenn der Fahrer das Fahrzeug beschleunigt oder abbremst, werden ähnlich wie bei einem Fahrzeug mit herkömmlichem alleinigen Verbrennungsmotorantrieb nacheinander entsprechende Übersetzungsstufen oder Gänge durchfahren, was dem Fahrer eine ihm bekannte akustische Rückmeldung über den Fahrzustand des Fahrzeugs gibt. Außerdem kann durch entsprechende Wahl der Übersetzungsstufen eine Leistungserzeugung mit relativ hohem Wirkungsgrad erzielt werden.

Vorteilhafterweise weist der Antrieb zusätzlich eine elektrische Speichervorrichtung auf, welche den Elektromotor mit Energie versorgen kann. Dabei kann die elektrische Speichervorrichtung durch den Betrieb des Generators wieder mit Energie aufgeladen werden.

Es wird weiterhin bevorzugt, dass den Übersetzungsstufen $G_n$ jeweils Übersetzungsverhältnisse in zugeordnet sind, welche Verhältnissen von Drehzahlen des Verbrennungsmotors zu Drehzahlen des wenigstens einen Antriebsrads entsprechen. Solche Übersetzungsverhältnisse in entsprechen dabei Übersetzungsverhältnissen wie sie von herkömmlichen Fahrzeuggetrieben bekannt sind, um dem Fahrer das ihm bekannte akustische Verhalten des Verbrennungsmotors zu geben.

Das zu erzeugende Drehmoment Trq wird hierbei auf Grundlage der vom Fahrer über ein Beschleunigungspedal angeforderten Leistung P, der Fahrgeschwindigkeit v des Fahrzeugs, des Übersetzungsverhältnisses in und eines Radius r des Antriebsrades (20) berechnet nach $Trq = P/(v/r) * i_n$, und zwar bei der Drehzahl $n = P/(2\pi * Trq)$. Benachbarte Übersetzungsstufenbereiche überlappen sich jeweils, d.h. ein oberer Drehmomentgrenzwert eines Übersetzungsstufenbereichs bzw. einer Übersetzungsstufe $G_n$ überschneidet sich mit einem unteren Drehmomentgrenzwert einer benachbarten Übersetzungsstufe $G_{n+1}$, so dass ein Überlappungsbereich $X_{n,n+1}$ erzeugt wird, wobei der Schritt des Wechselns von Übersetzungsstufe in die nächste nicht ausgeführt wird, solange der Betrieb des Verbrennungsmotors in einem solchen Überlappungsbereich stattfindet. Somit wird ein Pendeln zwischen zwei Übersetzungsstufen vermieden, wenn der Betrieb in der Nähe von zwei benachbarten Übersetzungsstufen stattfindet.

Weiterhin wird bevorzugt, dass ein Betrieb des Verbrennungsmotors und/oder des Generators und/oder des Elektromotors und/oder der elektrischen Speichervorrichtung derart von der Steuerung gesteuert wird, so dass jeweils ein optimaler Wirkungsgrad erzielt wird, um nicht zuletzt Energieverbrauch und Schadstoffemissionen des Verbrennungsmotors zu reduzieren.

Kurze Beschreibung der Zeichnungen

Nachfolgend wird die Erfindung anhand von Ausführungsformen in Verbindung mit den Figuren erläutert, wobei:

Figur 1 eine schematische Darstellung eines Antriebssystems gemäß einer Ausführungsform der Erfindung zeigt, welches in einem Fahrzeug implementiert ist;

Figur 2 ein Leistungs-/Geschwindigkeits-Diagramm zur Erläuterung des Verfahrens gemäß einer Ausführungsform der Erfindung zeigt;

Figur 3 ein Drehmoment-/Drehzahl-Diagramm zur Erläuterung eines Verfahrens gemäß der Ausführungsform der Erfindung zeigt; und

Figur 4 ein Ablaufdiagramm zur Erläuterung des Verfahrens gemäß Figur 2 zeigt.

Ausführungsformen der Erfindung

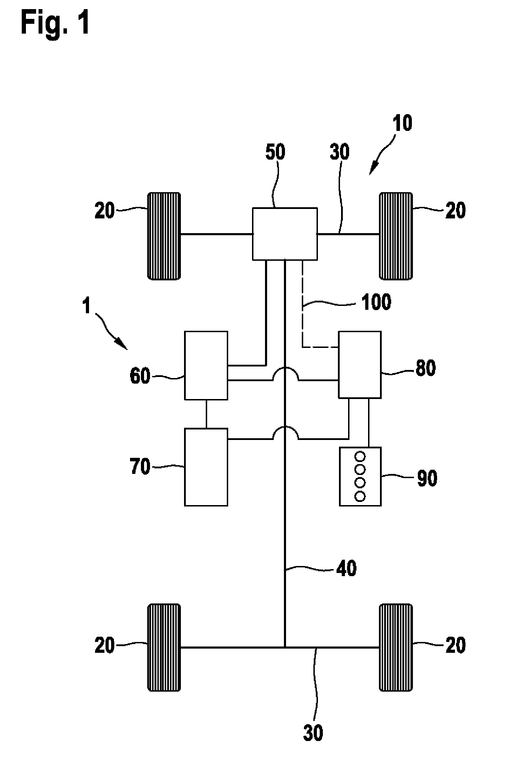

Figur 1 zeigt eine schematische Darstellung eines Antriebssystems 1 gemäß einer Ausführungsform der Erfindung, wobei das Antriebssystem 1 in einem schematisch dargestellten Fahrzeug 10 mit vier Rädern 20 sowie zwei jeweils ein Räderpaar verbindende Achswellen 30 und einem Fahrgestell 40 dargestellt ist.

Das Antriebssystem 1 umfasst einen Elektromotor 50, eine Steuerung 60, eine elektrische Speichervorrichtung 70, einen Generator 80 sowie einen Verbrennungsmotor 90. Der Elektromotor 50 ist derart angeordnet, dass er eines der an ihn direkt gekoppelten Antriebsräder 20 antreibt, wobei auch denkbar ist, dass der Elektromotor 50 beide an ihn gekoppelten Antriebsräder 20, 20 antreiben kann. Ebenso ist auch vorstellbar, dass jedem Räderpaar jeweils ein Elektromotor zugewiesen ist, oder auch jedem Rad jeweils ein Elektromotor. Der Elektromotor 50 wird über die Steuerung 60 mit Energie aus der elektrischen Speichervorrichtung 70 versorgt.

Die elektrische Speichervorrichtung 70 wird bei Bedarf von dem Generator 80 über die Steuerung 60 geladen, wobei der Generator 80 im dargestellten Beispiel in Figur 1 mittels des Verbrennungsmotors 90 angetrieben wird. Es ist allerdings auch vorstellbar, dass der Generator 80 bzw. die elektrische Speichervorrichtung 70 oder auch der Elektromotor 50 direkt, dargestellt in Figur 1 durch eine gestrichelte Linie 100 zwischen Generator 80 und Elektromotor 50, durch zusätzliche und/oder alternative andere Energiequellen, wie beispielsweise einen Brennstoffzellenstapel, mit Energie für deren Betrieb versorgt werden.

Es sei an dieser Stelle darauf hingewiesen, dass es sich bei dem in Figur 1 dargestellten Fahrzeug 10 um ein so genanntes serielles Hybridfahrzeug mit Range Extender handelt, d.h. dass der Verbrennungsmotor 90 "seriell" zum Elektromotor 50 angeordnet ist, und somit der Antrieb des Fahrzeugs 10 lediglich durch den Elektromotor 50 erfolgt. Der Verbrennungsmotor 90 kann den Elektromotor 50 mittels des Generators 80 selbst dann noch mit Energie versorgen, wenn die Energiereserven der elektrischen Speichervorrichtung 70 bereits erschöpft sind, woraus dich der Begriff Range Extender (= Reichweiten-Erweiterer) ableitet.

Das hier beschriebene Verfahren bzw. System soll allerdings nicht auf serielle Hybridfahrzeuge beschränkt sein, sondern kann auch für andere Formen hybrider Antriebstechnik angewendet werden.

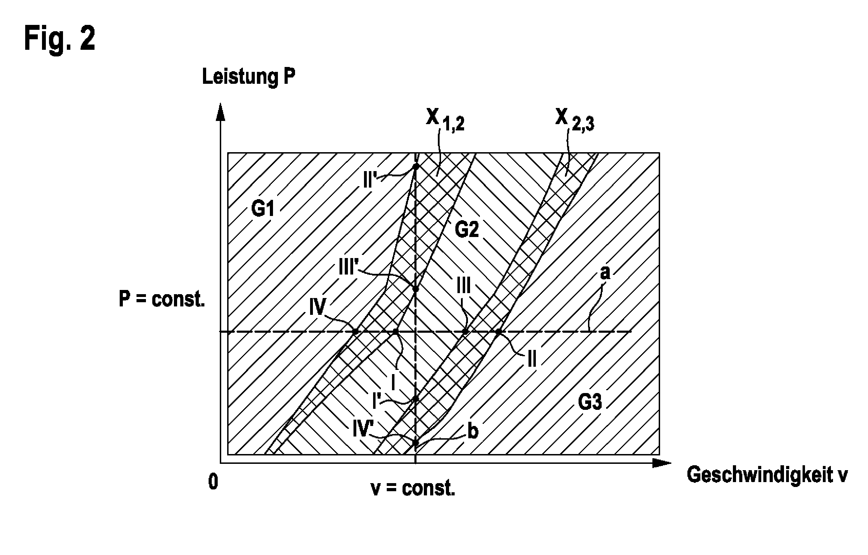

Mit Bezug auf Figur 2 soll nun das Verfahren gemäß einer Ausführungsform der Erfindung erläutert werden.

In der Figur 2 ist ein Leistungs-/Geschwindigkeits-Diagramm dargestellt, in dem drei unterschiedlich schraffierte Bereiche gekennzeichnet mit $G_1$, $G_2$, $G_3$ eingezeichnet sind, welche jeweils unterschiedliche Übersetzungsstufen mit entsprechenden Übersetzungsverhältnissen für den Verbrennungsmotor 90 darstellen sollen. Der Übersetzungsstufen-bereich $G_3$ entspricht hierbei der kleinsten Übersetzungsstufe, wie es von einem herkömmlichen Antrieb bekannt ist.

Wie in Figur 2 zu erkennen ist, überlappen sich die Übersetzungsstufenbereiche $G_1$ und $G_2$ in einem mit $X_{1,2}$ gekennzeichneten Überlappungsbereich, sowie die Übersetzungsstufenbereiche $G_2$ und $G_3$ in einem mit $X_{2,3}$ gekenn-zeichneten Überlappungsbereich. Wenn der momentane Betriebszustand in einem solchen Überlappungsbereich liegt, dann wird die momentane Übersetzungsstufe nicht verlassen, um so genannte Pendelschaltungen, d.h. ein Hin- und Herwechseln zwischen benachbarten Übersetzungsstufen, zu vermeiden. Die Größe des jeweiligen Überlappungsbereichs stellt somit eine Hysterese für die Schaltvorgänge dar.

Das heißt, wenn ein Fahrzeug ausgehend von Geschwindigkeit 0 mit konstanter Leistungsanforderung P beschleunigt, was im Diagramm in Figur 2 durch eine gestrichelte Linie a bei P = const. dargestellt ist, dann wird zunächst der Übersetzungsstufenbereich $G_1$ durchlaufen, und zwar bis zu einem Punkt I. Ab dort wird in den Übersetzungsstu-fenbereich $G_2$ geschaltet, und dieser bis zu einem Punkt II durchlaufen. Ab dort wird dann in den nächsten Überset-zungsstufenbereich $G_3$ geschaltet. Wenn die Geschwindigkeit abnimmt, d.h. wenn die Übersetzungsstufenbereiche in der anderen Richtung entlang der gestrichelten Linie a durchlaufen werden (in der Figur 2 von rechts nach links), dann findet ein Wechsel von Übersetzungsstufe $G_3$ nach $G_2$ bei einem Punkt III, und ein Wechsel von Übersetzungsstufe $G_2$ nach $G_1$ bei einem Punkt IV statt.

Bei einer Erhöhung der Leistungsanforderung P bei konstanter Geschwindigkeit v = const., dargestellt durch eine gestrichelte Linie b, erkennt man, dass durch die Steuerung ebenfalls ein Schalten zwischen den Übersetzungsstufen erfolgt, d.h. in der Figur 2 entlang der gestrichelten Linie b von unten nach oben von $G_3$ nach $G_2$ (bei Punkt I'), von $G_2$ nach $G_1$ (bei Punkt II') und zurück von $G_1$ nach $G_2$ (bei Punkt III') und von $G_2$ nach $G_3$ (bei Punkt IV'). Ein solches Hoch- und Runterschalten zwischen Übersetzungsstufen mit verschiedenen Übersetzungsverhältnissen vermittelt dem Fahrer ein von konventionellen Antrieben mit Getriebe gut bekanntes Fahrgefühl.

Neben den oben mit Bezug auf Figur 2 beispielhaft erläuterten Fahrzuständen für P = const. und v = const. sind selbstverständlich sind auch alle anderen Fahrzustände möglich, d.h. zum Beispiel Beschleunigen mit größer werdender Geschwindigkeit und Leistungsanforderung oder ein Verzögern mit kleiner werdender Geschwindigkeit und Leistungsanforderung.

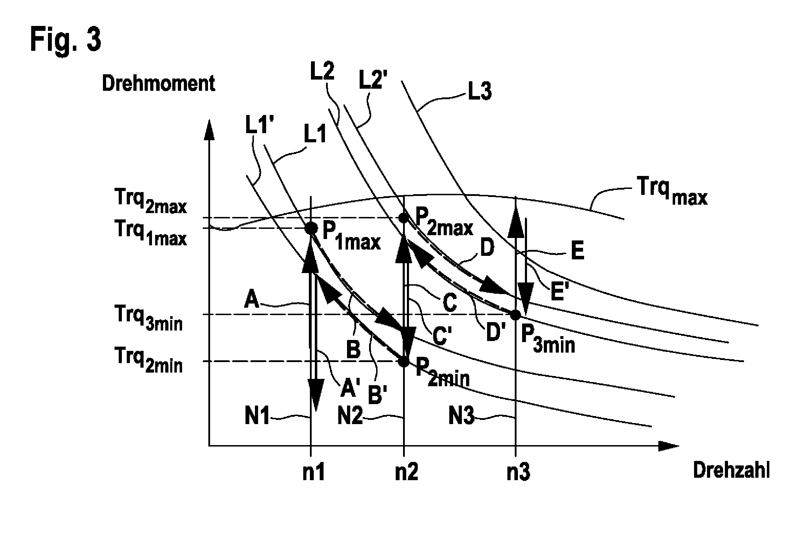

Jedoch soll das Verfahren noch mal für den Spezialfall konstanter Geschwindigkeit anhand eines in Figur 3 dargestellten Drehmoment-/Drehzahl-Diagramms erläutert werden.

In dem Diagramm in Figur 3 sind zum einen fünf Kurven L1, L1', L2, L2' und L3 zu sehen, welche jeweils Kurven konstanter Leistung in dem Drehmoment-/Drehzahl-Diagramm repräsentieren. Es ist weiterhin eine Kurve $Trq_{max}$ ein-getragen, welche das Minimum der Maximaldrehzahlkurven von Generator 80 und Verbrennungsmotor 90 darstellt, um somit eine Maximalgrenze hinsichtlich der Belastbarkeit von Generator 80 und Verbrennungsmotor 90 aufgrund ihrer physikalischen Eigenschaften zu geben.

Auf der mit Drehzahl bezeichneten Achse sind drei senkrecht stehende Geraden N1, N2 und N3 eingetragen, welche jeweils diskrete Drehzahlniveaus bei konstanten Drehzahlen n1, n2 und n3 repräsentieren und die Kurven konstanter Leistung schneiden. Auf der Geraden N1 liegt dabei ein Punkt $P_{1max}$, welcher ein bei der Drehzahl n1 maximal vom Generator 80 abgebbares Drehmoment (entspricht $Trq_{1max}$ auf der Drehmomentachse) angibt, das als oberer Drehmomentgrenzwert $P_{1max}$ bezeichnet werden soll. Auf der Geraden N2 liegt ein Punkt $P_{2min}$, welcher ein bei der Drehzahl n2 minimal vom Generator 80 abgebbares Drehmoment angibt (unterer Drehmomentgrenzwert $P_{2min}$, ent-spricht $Trq_{2min}$ auf der Drehmomentachse), und ein Punkt $P_{2max}$, welcher ein bei der Drehzahl n2 maximal vom Generator 80 abgebbares Drehmoment angibt (oberer Drehmomentgrenzwert $P_{2max}$, entspricht $Trq_{2max}$ auf der Drehmomentach-se). Ebenso liegt auf der Geraden N3 ein Punkt $P_{3min}$, welcher ein bei der Drehzahl n3 minimal vom Generator 80 abgebbares Drehmoment angibt (unterer Drehmomentgrenzwert $P_{3min}$, entspricht $Trq_{3min}$ auf der Drehmomentachse). Es sei noch bemerkt, dass hierbei die Drehzahlniveaus n1, n2, n3 den Übersetzungsstufen $G_3$, $G_2$, $G_1$ mit den Über-setzungsverhältnissen $i_3$, $i_2$, $i_1$ entsprechen.

Fährt nun ein Fahrzeug mit konstanter Geschwindigkeit v und mit einer vom Fahrer bestimmten Drehmoment- bzw. Leistungsanforderung an den Generator 80 bzw. den Verbrennungsmotor 90, welche unterhalb $P_{imax}$ (entsprechend $Trq_{1max}$ auf der Drehmomentachse) liegt, so wird von der Steuerung 60 für den Generator 80 eine Drehzahl entsprechend Drehzahlniveau n1 eingestellt. Hierbei sei bemerkt, dass zur Erfassung von Geschwindigkeiten, Drehmomenten bzw. Leistungen sowie Drehzahlen entsprechende in Figur 1 nicht dargestellte Sensoren mit der Steuerung 60 in Verbindung stehen.

Wenn nun eine stetig steigende Leistung P bzw. ein stetig steigendes Drehmoment angefordert wird, wobei Leistung P und Drehmoment Trq allgemein über die Beziehung $P = 2\pi \times Trq \times n$ zusammenhängen, wobei n die Drehzahl ist, dann wird das vom Generator 80 momentan abzugebende Drehmoment für die gewählte Übersetzungsstufe in entsprechend der Gleichung

$$Trq = P / (v/r \times i_n) \qquad\qquad (1)$$

bei der zugehörigen Drehzahl

$$n = P / (2\pi \times Trq) \qquad\qquad (2)$$

durch die Steuerung 60 berechnet, wobei die Steuerung 60 das berechnete und entsprechend der steigenden Leistungsanforderung P steigende Drehmoment Trq dann solange bei der konstanten Drehzahl des Drehzahlniveaus n1 am Generator 80 erhöht, d.h. im Diagramm entlang des mit A bezeichneten Pfeils auf der Geraden N1, bis der Punkt $P_{1max}$, d.h. der obere Drehmomentgrenzwert bei dem Drehzahlniveau n1, erreicht ist. Dabei soll die Pfeilspitze des Pfeils A die Richtung angeben, in der sich Drehmomentwert bewegt, d.h. bei steigender Leistungsanforderung durch den Fahrer.

In der Gleichung (1) bedeuten Trq das zu berechnende Drehmoment, P die angeforderte Leistung, v die aktuelle Fahrzeuggeschwindigkeit, r der Radius des Antriebsrads und in das Übersetzungsverhältnis, wobei in diesem Falle n = 1 ist.

Um in Gleichung (1) eine Division durch eine Geschwindigkeit v = 0 km/h zu vermeiden, wird eine Geschwindigkeit entsprechend einer typischen Geschwindigkeit bei einem Fahrzeug mit herkömmlichem Antrieb, d.h. Verbrennungsmotor mit Getriebe, bei Leerlaufdrehzahl im kleinsten Gang von beispielsweise v = 5 km/h angesetzt.

Eine weitere Steigerung des Drehmoments entsprechend einer weiter steigenden Leistungsanforderung wäre theoretisch, d.h. bedingt durch die betrieblichen Grenzen des Generators 80 oder des Verbrennungsmotors 90, nur bis zu der Kurve $Trq_{max}$ möglich, jedoch begrenzt die Steuerung 60 eine weitere Steigerung des Drehmoments bei dem Drehzahlniveau n1 durch den oberen Drehmomentgrenzwert $P_{1max}$, und wechselt bzw. "schaltet" dann sprungartig auf das nächsthöhere Drehzahlniveau n2 für den Generator 80, und zwar im Diagramm in Figur 2 entlang eines mit B bezeichneten und gestrichelt dargestellten Pfeils auf der Leistungskurve L1 bis knapp oberhalb des unteren Drehmomentgrenzwerts $P_{2min}$ auf der Geraden N2. Der Pfeil B ist deshalb gestrichelt dargestellt, um anzudeuten, dass der Wechsel von n1 nach n2 sprungartig erfolgt.

Steigt nun die Leistungsanforderung P weiter an, so wird das Drehmoment nunmehr bei dem Drehzahlniveau n2 solange erhöht (Pfeil C), bis der obere Drehmomentgrenzwert $P_{2max}$ erreicht ist. Von dort "schaltet" die Steuerung 60 auf das nächsthöhere Drehzahlniveau n3 (Pfeil D), wo in dem in Figur 2 dargestellten Beispiel das höchste Drehzahlniveau erreicht ist, und das Drehmoment nur noch entlang eines mit E bezeichneten Pfeils auf der Geraden N3 erhöht werden kann, bis die maximale Drehmomentgrenze $Trq_{max}$ erreicht ist.

Wenn jetzt die Leistungsanforderung abnimmt, nimmt zunächst der Drehmomentwert entlang eines mit E' gekennzeichneten Pfeils ab, und die Steuerung 60 "schaltet" dann bei Erreichen des Punktes $P_{3min}$ auf der Geraden N3 auf das nächsttiefere Drehzahlniveau n2 entlang eines gestrichelt dargestellten Pfeils D'. Auf der Geraden N2 wird dann bei Erreichen des Punktes P2min (Pfeil C') auf das Drehzahlniveau n1 geschaltet (gestrichelter Pfeil B'), wo das Drehmoment weiter entlang eines Pfeils A' abnimmt.

Wie anhand des Diagramms in Figur 3 zu erkennen ist, ergibt sich eine Hysterese für das Rauf- und Runterschalten, wobei die Größe der Hysterese durch den Abstand der Leistungskurven L1 und L1' bzw. L2 und L2' gegeben ist.

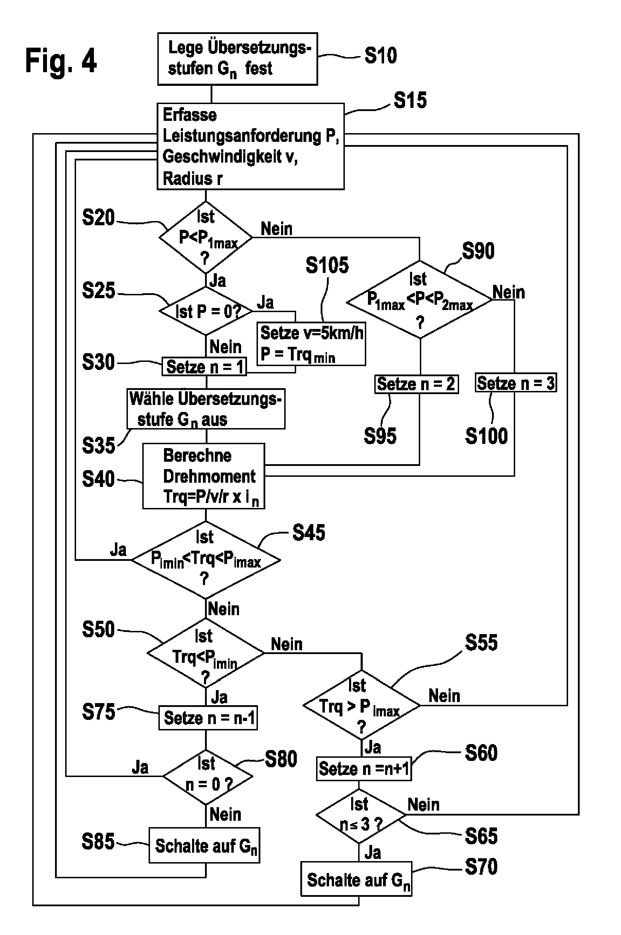

Figur 4 zeigt schließlich ein Ablaufdiagramm zur nochmaligen Erläuterung des Verfahrens.

In einem ersten Schritt S10 werden die Übersetzungsstufen $G_n$ in der Steuerung festgelegt. Dies kann einmalig geschehen oder auch vom Fahrer nach Bedarf eingestellt werden, beispielsweise entsprechend einem relativ frühen Hochschalten der Stufen bzw. Gänge oder entsprechend einer etwas sportlicheren Fahrweise, wobei die Gänge erst etwas später hochgeschaltet werden.

An dieser Stelle sei noch mal darauf hingewiesen, dass die den Übersetzungsstufen $G_n$ zugeordneten Über-

setzungsverhältnisse in im Wesentlichen Übersetzungsverhältnissen in einem Fahrzeug mit konventionellem Antrieb entsprechen, um dem Fahrer ein ihm bekanntes Fahrgefühl zu vermitteln.

In einem Schritt S15 werden die Leistungsanforderung P, die Geschwindigkeit v sowie der Radius r des oder der Antriebsräder erfasst, wobei der Radius r in der Regel konstant bleibt, es sei denn, es werden Räder anderer Größe montiert.

In einem Schritt S20 wird abgefragt, ob die Leistungsanforderung P kleiner als der obere Drehmomentgrenzwert $P_{1max}$ ist. Ist dies der Fall, dann wird in einem Schritt S25 abgefragt, ob die Leistungsanforderung P gleich Null ist, was der Fall sein könnte, wenn der Fahrer nicht das Beschleunigungspedal betätigt.

Es wird aber zunächst der Fall weiterverfolgt, wo P > 0 ist. Dann wird n = 1 gesetzt (S30), und somit die Übersetzungsstufe $G_1$ ausgewählt (S35), welche der momentanen Übersetzungsstufe $G_{momentan}$ entspricht.

In einem Schritt S40 wird das Drehmoment entsprechend Trq = P / v/r x in berechnet, welches vom Generator bzw. Verbrennungsmotor zu leisten ist, und wobei in das Übersetzungsverhältnis in der gewählten Übersetzungsstufe $G_n$ ist (in diesem Fall n = 1).

In einem Schritt S45 wird abgefragt, ob das berechnete Drehmoment Trq größer als der untere Drehmoment-grenzwert $P_{imin}$ und kleiner als der obere Drehmomentgrenzwert $P_{imax}$ ist, und zwar bei der bei S30 gewählten Über-setzungsstufe $G_n$.

Liegt Trq zwischen $P_{imin}$ und $P_{imax}$, dann springt das Verfahren zurück zu S15 und durchläuft die folgenden Schritte noch mal. Liegt Trq außerhalb $P_{imin}$ und $P_{imax}$, dann wird in einem Schritt S50 abgefragt, ob Trq < $P_{imin}$ ist. Ist dies nicht der Fall, dann wird in einem Schritt S55 abgefragt, ob Trq > $P_{imax}$ ist. Ist dies der Fall, dann wird n=n+1 gesetzt (S60). Bevor tatsächlich in den nächsten Gang geschaltet wird, wird noch abgefragt, ob der Index n der Übersetzungsstufe $G_n$ kleiner oder gleich 3 ist (S65), und zwar für den Fall, dass nur drei Übersetzungsstufen vorhanden sein sollen. Falls die Bedingung bei S65 erfüllt ist, wird bei S70 in die nächste Übersetzungsstufe geschaltet. Danach springt das Verfahren wieder zu S15, wo erneut die Leistungsanforderung P usw. erfasst werden.

Ist die Bedingung bei S65 nicht erfüllt, d.h. ist die Übersetzungsstufe $G_n$ mit n=3 bereits eingelegt, dann wird nicht geschaltet, und das Verfahren springt wieder zu S15.

Für den Fall, dass bei S50 die Bedingung erfüllt ist, d.h. Trq < $P_{imin}$, wird bei S75 n = n - 1 gesetzt. Für den Fall, dass dann n = 0 wäre (S80), wenn nämlich vorher der Gang $G_n$ mit n=1 eingelegt war, dann springt das Verfahren wieder zurück zu S15.

Ist aber bei S80 n ungleich 0, dann wird bei S85 in die nächste Übersetzungsstufe $G_{n=n-1}$ geschaltet. Danach springt das Verfahren wieder zu S15.

Ist die Bedingung bei S20 nicht erfüllt, d.h. ist die Leistungsanforderung P > $P_{1max}$, dann wird bei S90 abgefragt, ob P kleiner als $P_{2max}$ und größer als $P_{1max}$ ist. Ist die Bedingung erfüllt, dann wird n = 2 gesetzt (S95), und das Verfahren verzweigt zu S40.

Ist die Bedingung bei S90 nicht erfüllt, dann wird n = 3 gesetzt (S100), und das Verfahren verzweigt dann erst zu S40.

Ist die Bedingung bei S25 erfüllt, d.h. ist P = 0, wenn z.B. keine Leistungsanforderung besteht, dann wird eine Mindestgeschwindigkeit von beispielsweise v = 5 km/h und ein Mindestdrehmoment $Trq_{min}$ gesetzt (S105), so dass das Fahrzeug, wie es auch bei einem konventionellen Antrieb bekannt ist, eine relativ langsame Eigengeschwindigkeit aufweist. Danach setzt das Verfahren bei S30 fort.

Es sei noch bemerkt, dass in dem Ablaufdiagramm in Figur 4 die in Figur 2 in dem Leistungs-/Geschwindigkeitsdiagramm gezeigten Überlappungsbereiche $X_{1,2}$ und $X_{2,3}$ der besseren Übersichtlichkeit wegen nicht dargestellt sind, aber selbstverständlich in dem Ablaufdiagramm entsprechend mit aufgenommen werden können.

**Patentansprüche**

1. Verfahren zur Steuerung eines Antriebs (1) eines Fahrzeugs (10), wobei der Antrieb (1) umfasst:

- wenigstens einen Elektromotor (50);
- einen Generator (80) zum Versorgen des Elektromotors (50) mit Energie;
- einen Verbrennungsmotor (90) zum Antreiben des Generators (80);
- wenigstens ein mit dem Elektromotor (50) gekoppeltes und von diesem antreibbares Antriebsrad (20); und
- eine mit dem Elektromotor (50), dem Generator (80) und dem Verbrennungsmotor (90) in Verbindung stehende Steuerung (60);

mit den ersten zwei Verfahrensschritten:

- Festlegen (S10) einer Mehrzahl von Übersetzungsstufen $G_n$ in der Steuerung (60) für einen Betrieb des Verbrennungsmotors (90), wobei n eine natürliche Zahl ist;
- Erfassen (S15) einer momentanen Fahrgeschwindigkeit v des Fahrzeugs (10) an dem wenigstens einen Antriebsrad (20) sowie einer von einem Fahrer angeforderten Leistung P durch die Steuerung (60);

**dadurch gekennzeichnet, dass** das Verfahren den folgenden dritten Schritt umfasst:

- Auswählen (S35) einer momentanen Übersetzungsstufe $G_{momentan}$ von der Mehrzahl von Übersetzungsstufen $G_n$ in Abhängigkeit von momentaner Fahrgeschwindigkeit v und angeforderter Leistung P durch die Steuerung (60), wobei der Betrieb des Verbrennungsmotors (90) bzw. des Generators (80) bei der momentanen Übersetzungsstufe $G_{momentan}$ unter Abgabe eines sich ändernden, d.h. zunehmenden oder abnehmenden, Drehmoments Trq bei einer Drehzahl n stattfindet, und zwar solange, bis ein oberer oder unterer Drehmomentgrenzwert bei der jeweiligen momentanen Übersetzungsstufe $G_{momentan}$ erreicht wird; und
- Wechseln (S60, S75) des Betriebs des Verbrennungsmotors (90) bzw. des Generators (80) auf eine zu der momentanen Übersetzungsstufe $G_{momentan}$ benachbarte Übersetzungsstufe $G_{n\pm1}$ durch die Steuerung (60), und zwar wenn der obere oder untere Drehmomentgrenzwert bei der jeweiligen momentanen Übersetzungsstufe überschritten bzw. unterschritten wird

wobei bei keinem der drei Verfahrensschritte zur Steuerung des Antriebs (1) ein Getriebe verwendet wird.

2. Verfahren nach Anspruch 1, wobei der Antrieb (1) zusätzlich eine elektrische Speichervorrichtung (70) aufweist, mit welcher der Elektromotor (50) mit Energie versorgt wird, und welche von dem Generator (80) Energie empfängt.

3. Verfahren nach Anspruch 1 oder 2, wobei den Übersetzungsstufen $G_n$ jeweils Übersetzungsverhältnisse in zugeordnet sind, welche Verhältnissen von Drehzahlen des Verbrennungsmotors (90) zu Drehzahlen des wenigstens einen Antriebsrads (20) entsprechen, wobei n eine natürliche Zahl ist.

4. Verfahren nach Anspruch 3, wobei das zu erzeugende Drehmoment Trq auf Grundlage der angeforderten Leistung P, der Fahrgeschwindigkeit v, des Übersetzungsverhältnisses in und eines Radius r des Antriebsrades (20) berechnet wird nach Trq = P/(v/r)*$i_n$ bei der Drehzahl n = P/(2$\pi$ * Trq).

5. Verfahren nach Ansprüchen 1 bis 4, wobei sich jeweils ein oberer Drehmomentgrenzwert einer Übersetzungsstufe $G_n$ mit einem unteren Drehmomentgrenzwert einer benachbarten Übersetzungsstufe $G_{n+1}$ überschneidet, so dass ein Überlappungsbereich $X_{n,n+i}$ erzeugt wird, wobei der Schritt des Wechselns (S60, S75) nicht ausgeführt wird, solange der Betrieb des Verbrennungsmotors (90) in einem solchen Überlappungsbereich stattfindet.

6. Verfahren nach Ansprüchen 1 bis 5, wobei ein Betrieb des Verbrennungsmotors (90) und/oder des Generators (80) und/oder des Elektromotors (50) und/oder der elektrischen Speichervorrichtung (70) derart von der Steuerung (60) gesteuert wird, dass jeweils ein optimaler Wirkungsgrad erzielt wird.

7. Antriebssystem für ein Fahrzeug (10) umfassend:

- wenigstens einen Elektromotor (50);
- einen Generator (80) zum Versorgen des Elektromotors (50) mit Energie;
- einen Verbrennungsmotor (90) zum Antreiben des Generators (80);
- wenigstens ein mit dem Elektromotor (50) gekoppeltes und von diesem antreibbares Antriebsrad (20); und
- eine mit dem Elektromotor (50), dem Generator (80) und dem Verbrennungsmotor (90) in Verbindung stehende Steuerung (60);

wobei das Antriebssystem nach einem oder mehreren der Ansprüche 1 bis 6 betrieben wird.

8. Fahrzeug mit einem Antriebssystem nach Anspruch 7.


**Claims**

1. Method for controlling a drive (1) of a vehicle (10), wherein the drive (1) comprises:

- at least one electric motor (50);

- a generator (80) for supplying energy to the electric motor (50);
- an internal combustion engine (90) for driving the generator (80);
- at least one drive wheel (20) which is coupled to the electric motor (50) and can be driven by the said electric motor; and
- a control means (60) which is connected to the electric motor (50), to the generator (80) and to the internal combustion engine (90);

comprising the first two method steps of:

- definition (S10) of a plurality of transmission stages $G_n$ in the control means (60) for operating the internal combustion engine (90), where n is a natural number;
- detection (S15) of a current travelling speed v of the vehicle (10) at the at least one drive wheel (20) and also detection of a power P, which is requested by a driver, by the control means (60);

**characterized in that** the method comprises the following third step:

- selection (S35) of a current transmission stage Gcurrent from amongst the plurality of transmission stages $G_n$ depending on the current travelling speed v and the requested power P by the control means (60), wherein the operation of the internal combustion engine (90) and, respectively, of the generator (80) in the current transmission stage $G_{current}$ takes place with a changing, that is to say increasing or decreasing, torque Trq being emitted at a rotation speed n, specifically until an upper or lower torque limit value in the respective current transmission stage $G_{current}$ is reached; and
- changeover (S60, S75) of the operation of the internal combustion engine (90) and, respectively, of the generator (80) to a transmission stage $G_{n\pm i}$ which is adjacent to the current transmission stage $G_{current}$ by the control means (60), specifically when the upper or lower torque limit value in the respective current transmission stage is exceeded or undershot,

wherein a gear mechanism is not used for controlling the drive (1) in any of the three method steps.

2. Method according to Claim 1, wherein the drive (1) additionally has an electrical storage apparatus (70) with which energy can be supplied to the electric motor (50) and which receives energy from the generator (80).

3. Method according to Claim 1 or 2, wherein transmission ratios in are associated with the transmission stages $G_n$, the said ratios of rotation speeds of the internal combustion engine (90) corresponding to the rotation speeds of the at least one drive wheel (20), wherein n is a natural number.

4. Method according to Claim 3, wherein the torque Trq which is to be generated is calculated on the basis of the requested power P, the travelling speed v, the transmission ratio in and a radius r of the drive wheel (20) in accordance with $Trq = P/(v/r)*i_n$ at the rotation speed $n = P/(2\pi n*Trq)$.

5. Method according to Claims 1 to 4, wherein a respective upper torque limit value of a transmission stage $G_n$ overlaps a lower torque limit value of an adjacent transmission stage $G_{n+1}$, so that an overlap region $X_{n,n+1}$ is generated, wherein the step of changeover (S60, S75) is not executed as long as operation of the internal combustion engine (90) takes place in an overlap region of this kind.

6. Method according to Claims 1 to 5, wherein operation of the internal combustion engine (90) and/or of the generator (80) and/or of the electric motor (50) and/or of the electrical storage apparatus (70) is controlled by the control means (60) in such a way that an optimum degree of efficiency is achieved in each case.

7. Drive system for a vehicle (10), comprising

- at least one electric motor (50);
- a generator (80) for supplying energy to the electric motor (50);
- an internal combustion engine (90) for driving the generator (80);
- at least one drive wheel (20) which is coupled to the electric motor (50) and can be driven by the said electric motor; and
- a control means (60) which is connected to the electric motor (50), to the generator (80) and to the internal combustion engine (90);

wherein the drive system is operated in accordance with one or more of Claims 1 to 6.

8. Vehicle having a drive system according to Claim 7.

**Revendications**

1. Procédé de commande d'un entraînement (1) d'un véhicule (10), l'entraînement (1) comprenant :

- au moins un moteur électrique (50) ;
- un générateur (80) servant à alimenter en énergie le moteur électrique (50) ;
- un moteur à combustion interne (90) pour entraîner en entrée le générateur (80) ;
- au moins une roue motrice (20) couplée au moteur électrique (50) et pouvant être entraînée par lui ; et
- un élément de commande (60) relié au moteur électrique (50), au générateur (80) et au moteur à combustion interne (90) ;

avec les deux premières étapes de procédé suivantes :

- détermination (S10) d'une pluralité d'étages de multiplication $G_n$ dans l'élément de commande (60) pour un fonctionnement du moteur à combustion interne (90), n étant un nombre naturel ;
- détection (S15) d'une vitesse de conduite v momentanée du véhicule (10) au niveau de l'au moins une roue motrice (20) ainsi que d'une puissance P demandée par un conducteur par le biais de l'élément de commande (60) ;

**caractérisé en ce que** le procédé comprend la troisième étape suivante :

- sélection (S35) d'un étage de multiplication momentané $G_{momentan}$ parmi la pluralité d'étages de multiplication $G_n$ en fonction de la vitesse de conduite v momentanée et de la puissance P demandée par le biais de l'élément de commande (60), le fonctionnement du moteur à combustion interne (90) et/ou du générateur (80) se produisant, à l'étage de multiplication momentané $G_{momentan}$, par émission d'un couple de rotation Trq variant, c'est-à-dire augmentant ou diminuant, en présence d'une certaine vitesse de rotation n et notamment jusqu'à ce qu'une valeur limite de couple de rotation supérieure ou inférieure soit atteinte avec l'étage de multiplication $G_{momentan}$ momentané respectif ; et
- passage (S60, S75) du fonctionnement du moteur à combustion interne (90) et/ou du générateur (80) à un étage de multiplication $G_{n\pm1}$ connexe de l'étage de multiplication momentané $G_{momentan}$ par le biais de l'élément de commande (60), et notamment lorsque la valeur limite de couple de rotation supérieure ou inférieure de l'étage de multiplication momentané respectif est dépassée à la hausse et/ou à la baisse ; une transmission étant utilisée en l'absence des trois étapes de procédé de commande de l'entraînement (1).

2. Procédé selon la revendication 1, l'entraînement (1) comportant en outre un dispositif d'accumulateur (70) électrique à l'aide duquel le moteur électrique (50) est alimenté en énergie et recevant l'énergie provenant du générateur (80).

3. Procédé selon la revendication 1 ou 2, les rapports de multiplication $i_n$ étant respectivement associés aux étages de multiplication $G_n$, lesdits rapports correspondant aux vitesses de rotation du moteur à combustion interne (90) par rapport aux vitesses de rotation de l'au moins une roue motrice (20), n étant un nombre naturel.

4. Procédé selon la revendication 3, le couple de rotation Trq à produire étant calculé sur la base de la puissance P demandée, de la vitesse de conduite v, du rapport de multiplication $i_n$ et d'un rayon r de la roue motrice (20) selon $Trq = P/(v/r)*i_n$ à la vitesse de rotation $n = P/(2\pi * Trq)$.

5. Procédé selon l'une quelconque des revendications 1 à 4, une valeur limite de couple de rotation supérieure d'un étage de multiplication $G_n$ recoupant respectivement une valeur limite de couple de rotation inférieure d'un étage de multiplication $G_{n+1}$ connexe, de sorte qu'on obtient une zone de chevauchement $X_{n,n+1}$, l'étape de passage (S60, S75) ne se produisant pas tant que le fonctionnement du moteur à combustion interne (90) se trouve dans une telle zone de chevauchement.

6. Procédé selon l'une quelconque des revendications 1 à 5, un fonctionnement du moteur à combustion interne (90) et/ou du générateur (80) et/ou du moteur électrique (50) et/ou du dispositif d'accumulateur (70) électrique étant commandé de telle sorte par l'élément de commande (60) qu'un degré d'action optimal est respectivement atteint.

7. Système d'entraînement pour un véhicule (10) comprenant :

- au moins un moteur électrique (50) ;
- un générateur (80) servant à alimenter en énergie le moteur électrique (50) ;
- un moteur à combustion interne (90) pour entraîner en entrée le générateur (80) ;
- au moins une roue motrice (20) couplée au moteur électrique (50) et pouvant être entraînée par celui-ci ; et
- un élément de commande (60) relié au moteur électrique (50), au générateur (80) et au moteur à combustion interne (90) ;

le système d'entraînement étant entraîné selon l'une quelconque des revendications 1 à 6 ou plusieurs d'entre elles.

8. Véhicule doté d'un système d'entraînement selon la revendication 7.

# Fig. 1

## Fig. 2

EP 2 426 022 B1

Fig. 3

**Fig. 4**

Lege Übersetzungsstufen $G_n$ fest — S10

Erfasse
Leistungsanforderung P,
Geschwindigkeit v,
Radius r — S15

S20 — Ist
$P<P_{1max}$
?

Nein

Ja

S25 — Ist P = 0?

Ja

S105 — Setze v=5km/h
$P = Trq_{min}$

Nein

S90 — Ist
$P_{1max}<P<P_{2max}$
?

Nein

S30 — Setze n = 1

Setze n = 2 — S95

Setze n = 3 — S100

Wähle Übersetzungsstufe $G_n$ aus

S35

S40 — Berechne
Drehmoment
$Trq=P/v/r \times i_n$

Ja

S45 — Ist
$P_{imin}<Trq<P_{imax}$
?

Nein

S50 — Ist
$Trq<P_{imin}$
?

Nein

S55 — Ist
$Trq > P_{imax}$
?

Nein

Ja

S75 — Setze n = n-1

S60 — Setze n =n+1

Ja

S80 — Ist
n = 0 ?

Nein

S65 — Ist
n ≤ 3 ?

Nein

Ja

S85 — Schalte auf $G_n$

S70 — Schalte auf $G_n$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202009014828 U1
- US 2010029442 A1